# EUROPÄISCHE PATENTSCHRIFT

(11) **EP 0 487 813 B1**
(45) Veröffentlichungstag und Bekanntmachung des Hinweises auf die Patenterteilung: **21.09.1994**
(21) Anmeldenummer: 91105226.4
(22) Anmeldetag: 03.04.1991
(51) Int. Cl.: C02F 1/04, C02F 1/16, B01D 3/10, B01D 19/00

(54) **Verfahren und Vorrichtung zur Gewinnung von Süsswasser aus warmem Meerwasser**
Process and device to obtain fresh water from warm sea water
Procédé et appareil pour l'obtention d'eau douce à partir de l'eau de mer

(30) Priorität: 15.11.1990 DE 4036437
(43) Veröffentlichungstag der Anmeldung: 03.06.1992
(73) Patentinhaber: PI PRAKTISCHE INFORMATIK GMBH, 80809 München (DE)
(72) Erfinder: Schmidt, Edgar, Dr., W-8000 München 40 (DE)
(74) Vertreter: Lewald, Dietrich, Dipl.-Ing.

(56) Entgegenhaltungen:
- DE-A- 2 829 903
- DE-A- 3 938 670
- FR-A- 2 601 353

## Beschreibung

Die Erfindung betrifft ein Verfahren zur Gewinnung von Süßwasser aus enlüftetem warmen Meerwasser (Substrat) gemäß dem Oberbegriff des Patentanspruchs 1 und eine Vorrichtung zur Durchführung das Verfahrens.

Gegenstand der Erfindung ist auch eine Vorrichtung zur Durchführung des Verfahrens.

Das US-Patent 3,783,108 beschreibt ähnliche Maßnahmen. Die dort vorgeschlagenen Vorrichtungen sind, wie die anderen bisher bekannt gewordenen Vorrichtungen mit ähnlicher Zweckbestimmung auch, auf dem festen Land errichtet. Das hat konstruktive und betriebliche Nachteile (für den Prozeß nicht erforderliche Stützkonstruktionen, Rohrleitungen und Pumpen und unnötigen Energieverbrauch). Bisher wurde auch der große Vorteil einer konsequenten Trennung des Substrats vom Heiz- bzw. Kühlwasser nicht richtig erkannt; sie eröffnet die Möglichkeit der Eindampfung des Substrats bis hin zur Verdoppelung der Salzkonzentration.

Auch der Vorteil einer sehr weitgehenden Entlüftung des Substrats vor dem Verdampfung in einem eigenen diskontinuierlichen Prozeßschritt ist bisher noch nicht richtig erkannt worden; damit wird der dem Dampfstrom von den Inertgasen entgegengesetzte Widerstand im Dampfraum herabgesetzt.

Der Erfindung liegt die Aufgabe zugrunde, das verfahren sowie die Vorrichtung zur Gewinnung von Süßwasser aus enlüftetem warmen Meerwasser gemäß dem stand der Technik derart zu verbessern, daß auf eine große Anzahl von Zusatzaggregaten verzichtet und die gesamte Vorrichtung vereinfacht werden kann.

Das wird erfindungsgemäß dadurch erreicht, daß das Wassergewinnungsaggregat unter Wasser schwebend betrieben wird und die warme Meeresströmung nahe der Oberfläche und die Wellenbewegung veranlaßt worden, dem Prozeß unmittelbar Verdampfungswärme zuzuführen, und die kalte Meeresströmung in der Tiefe des Meeres veranlaßt wird, aus dem Prozeß Kondensationswärme abzuführen; ferner dadurch, daß das Substrat vom Heiz- und Kühlwasser getrennt geführt wird; ferner dadurch, daß eine weitestgehende Entlüftung vor dem Verdampfen vorgenommen wird.

Eine Vorrichtung zeichnet sich diesbezüglich erfindungsgemäß aus durch Anordnung des mehrere hundert Meter messenden Tauchrohrs, des Entlüfters und des Verdampfers unter Wasser, und durch Ausbildung des Entlüfters und des Verdampfers als Wärmetauscher mit Rückschlagventilen an den Auslaßöffnungen der Heizrohre, in welchen durch die Meeresströmung und die Wellenbewegung eine gerichtete turbulente Strömung warmen Meerwassers entsteht, und durch Ausstattung des außen der kalten Meeresströmung und der Konvektion ausgesetzten Tauchrohrs mit Kühlrippen.

Eine beispielsweis Ausführungsform der Erfindung soll nun mit bezug auf die beiliegenden Zeichnungen näher erläutert werden. Diese zeigen in
FIGUR 1 eine schematische Gesamtdarstellung und in
FIGUR 2 eine Einzelheit.

Die Entlüftungskammer (4) und die Verdampfungskammer (5) befinden sich unter der Meeresoberfläche (1). In jeder der beiden Kammern wird ein Vakuum erzeugt und aufrechterhalten, welches etwa dem Siededruck des Meerwassers bei Umgebungstemperatur entspricht. Die Entlüftungskammer (4) hat für Meerwasser einen Einlaß, an welchem eine Druckreduktionsvorrichtung (11) angebracht ist. Die Verdampfungskammer (5) hat für die Sole einen Auslaß, an welchem eine Soleförderpumpe (13) angebracht ist. Die beiden Kammern (4) (5) stehen über eine Rohrleitung mit Absperrhahn (12) miteinander in Verbindung. Die Vakua in den beiden Kammern (4) und (5) bestehen unabhängig voneinander. Die Druckreduktionsvorrichtung (11), der Absperrhahn (12), die Soleförderpumpe (13) und die zu einer umschaltbaren Vakuumpumpe (17)(18) zusammengefaßten Vakuumpumpen (17) und (18) werden geregelt betrieben. Entlüfter (4) und Verdampfer (5) sind als Wärmetauscher ausgebildet und von Heizrohren (32) durchdrungen, die durch die Wirkungen von Strömung und Wellenbewegung des umgebenden Meerwassers von diesem turbulent durchströmt werden. Das den Dampfraum (16) bildende senkrecht im Meer schwebende Tauchrohr (3) dient als Kondensator. Das Tauchrohr (3) ist außen mit Kühlrippen (14) als zusätzlichen Wärmeaustauschflächen versehen. Es wird durch die Strömung des umgebenden kalten Meerwassers und durch Konvektion gekühlt. Die Anbringung des Wassergewinnungsaggregats am Meeresboden geschieht mit Hilfe einer Einpunktaufhängung über eine Ankerkette (24) mit einem Ankergewicht (23). Die Befestigung (25) der Ankerkette (24) am Tauchrohr (3) geschieht etwa in der Mitte zwischen dem Auftriebspunkt (9) und dem Schwerpunkt (10) des Wassergewinnungsaggregats. Damit treten bei jeder Abweichung des Tauchrohrs (3) von der Vertikalen rückstellende Drehmomente auf. Vertikale Schwingungen des Wassergewinnungsaggregats werden durch am Tauchrohr (3) angebrachte horizontale Dämpfungsflächen (15) abgedämpft, soweit diese Schwingungen nicht schon von der Ankerkette (24) abgefangen werden. Die Regelung der Höhenlage des Wassergewinnungsaggregats geschieht mit Hilfe einer Luftkammer (6) mit variablem Luftinhalt. Am Eingang der Luftkammer (6) ist ein geregelt betriebener Kompressor (20) angebracht, der die Luft über eine Rohrleitung aus der freien Atmosphäre bezieht. Am oberen Ende dieser Rohrleitung ist ein Schwimmer (19) angebracht. Die Luft kann aus der Luftkammer (6) über die Rohrleitung auch abgelassen werden.

### AUFBAU DER GESAMTVORRICHTUNG

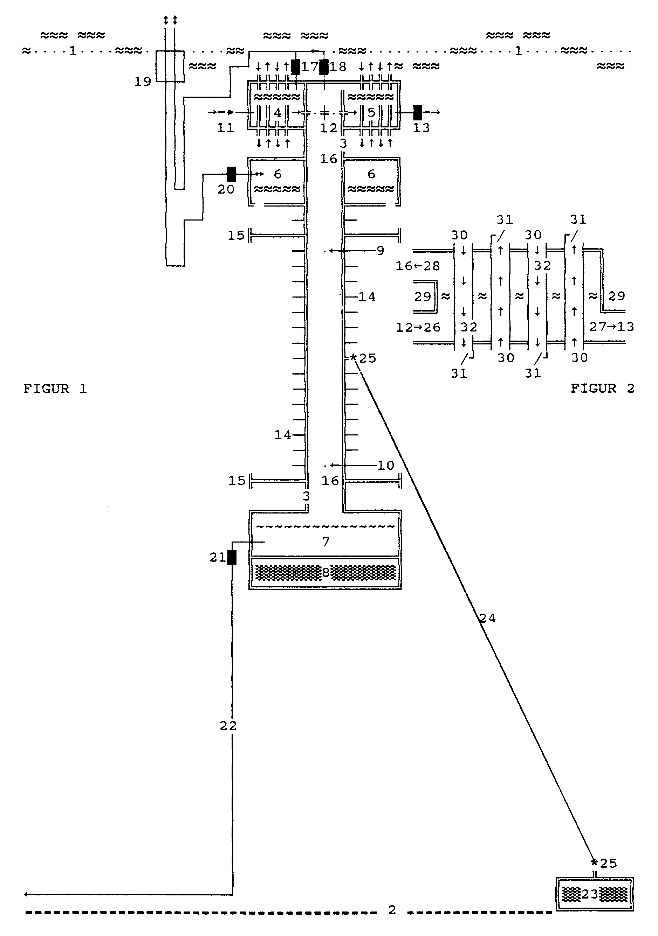

Ein Beispiel für die Gesamtvorrichtung ist in den FIGUREN 1 und 2 schematisch dargestellt. FIGUR 1 zeigt auch die Meeresoberfläche (1) und den Meeresboden (2). Das Wassergewinnungsaggregat besteht aus einem mehrere hundert Meter langen vertikal im Meerwasser schwebenden Tauchrohr (3), welches am oberen Ende eine Entlüftungskammer (4), eine Verdampfungskammer (5) und eine Luftkammer (6), am unteren Ende eine Süßwasserkammer (7) und darunter ein Gewicht (8) aufweist, und aus den starr mit (3) bis (8) verbundenen Teilen. Die Gesamtvorrichtung besteht aus dem Wassergewinnungsaggregat, dem Schwimmer (19) mit den dazugehörigen Rohrleitungen, der Süßwasserleitung (22) und der Anbringung (23) bis (25). In FIGUR 1 sind der Auftriebspunkt (9) und der Schwerpunkt (10) des Wassergewinnungsaggretats gekennzeichnet. Am Eingang der Entlüftungskammer (4) befindet sich eine Druckreduktionsvorrichtung (11), die als ein durch Regelung zu öffnender und zu schließender Absperrhahn ausgebildet ist. Die Entlüftungskammer (4) steht mit der Verdampfungskammer (5) über eine Rohrleitung in Verbindung, in der sich ein weiterer solcher Absperrhahn (12) befindet. Am Ausgang der Verdampfungskammer (5) befindet sich eine Soleförderpumpe (13). Am Tauchrohr (3) sind Kühlrippen (14) und Dämpfungsflächen (15) angebracht. Der Dampfraum (16) besteht im wesentlichen aus dem Inneren der Tauchrohrs (3). Eine Vakuumpumpe (17) hat ihren Eingang in der Entlüftungskammer (4) und ihren Ausgang über eine Rohrleitung am Schwimmer (19) in der freien Atmosphäre. Eine Vakuumpumpe (18) hat ihren Eingang im Dampfraum (16) und ihren Ausgang über eine Rohrleitung am Schwimmer (19) in der freien Atmosphäre. Die Vakuumpumpen (17) und (18) können durch nur eine umschaltbare Vakuumpumpe (17)(18) realisiert sein. Ein Kompressor (20) hat einen über eine Rohrleitung vom Schwimmer (19) getragenen Eingang in der freien Atmosphäre und einen Ausgang in der Luftkammer (6). Eine Süßwasserförderpumpe (21) hat einen Eingang in der Süßwasserkammer (7) und einen Ausgang zur Süßwasserleitung (22) hin. Die Süßwasserleitung (22) kann auf dem Meeresboden (2) verlegt werden und führt dann zu einem an der Küste gelegenen Vorratsbehälter. Die Süßwasserleitung (22) kann auch zum Schwimmer (19) hin verlegt werden und endet dann in einem schwimmenden, an- und abkoppelbaren Vorratsbehälter, der im gefüllten Zustand abgeschleppt wird. In Figur 1 nicht eingetragen sind die Strom- und Datenleitungen. Diese Leitungen können zur Küste zum Netz bzw. zu einem dort befindlichen Prozeßrechner führen. Ein Stromaggregat und der Prozeßrechner können aber auch direkt mit dem Wassergewinnungsaggregat verbunden sein. Die Anbringung des Wassergewinnungsaggregats am Meeresboden besteht aus einem Ankergewicht (23), einer Ankerkette (24) und aus Befestigungsvorrichtungen (25) an beiden Enden der Ankerkette. FIGUR 2 stellt eine ausführlichere schematische Darstellung des als Wärmetauscher ausgelegten Verdampfers (5) dar. FIGUR 2 zeigt den Eingang (26) für das entlüftete Meerwasser, den Ausgang (27) für die Sole, den Ausgang (28) des Verdampfers (5) zum Dampfraum (16) und die Meerwasseroberfläche (29) im Verdampfer. Die Einlaßöffnungen (30) für warmes Meerwasser aus der Umgebung des Verdampfers (5) und die Auslaßöffnungen für Meerwasser mit ihren Rückschlagventilen (31) sind in FIGUR 2 dargestellt. Heizrohre (32) verbinden diese Ein- und Auslaßöffnungen miteinander. Die Heizrohre (32) sind in der FIGUR 2 in nur in vertikaler Richtung sichtbar. Es sind aber auch die beiden anderen Richtungen des dreidimensionalen Raums vorgesehen. Die Entlüftungskammer (4) ist auch als Wärmetauscher ausgelegt und ähnlich wie die Verdampfungskammer (5) aufgebaut. Im Unterschied zur Verdampfungskammer (5) hat die Entlüftungskammer (4) jedoch keinen Ausgang (28) zum Dampfraum (16). Außerdem befinden sich am Eingang (26) anstelle der Rohrleitung mit Absperrhahn (12) die Druckreduktionsvorrichtung (11) und am Ausgang (27) anstelle der Soleförderpumpe (13) die Rohrleitung mit Absperrhahn (12).

### FUNKTION DER GESAMTVORRICHTUNG

Entlüftung: Die im Meerwasser gelösten Luftbestandteile werden vor der Verdampfung zum größten Teil entfernt. Mit Hilfe der Vakuumpumpe (17) wird in der Entlüftungskammer (4) die dort zunächst vorhandene atmosphärische Luft abgesaugt. Danach wird die Druckreduktionsvorrichtung (11) geöffnet. Warmes mit gelöster Luft behaftetes Meerwasser tritt in die Entlüftungskammer (4) ein. Sobald in der Entlüftungskammer (4) genügend warmes Meerwasser eingedrungen ist, wird die Druckreduktionsvorrichtung (11) geschlossen. Die gelösten Luftbestandteile werden in der Entlüftungskammer (4) bis auf einen beim nachfolgenden Verdampfungsvorgang unwirksamen Rest aus dem warmen Meerwasser in Form von Luftblasen ausgeschieden und von der Vakuumpumpe (17) abgesaugt. Wenn der Druck in der Entlüftungskammer (4) unter den Siededruck des warmen Meerwassers abgesunken ist, wird die Vakuumpumpe (17) abgeschaltet. Das entlüftete Meerwasser wird durch Öffnung des in der Rohrleitung zwischen Entlüfter (4) und Verdampfer (5) angebrachten Absperrhahns (12) in die zuvor evakuierte Verdampfungskammer (5) geleitet. Dazu wird auf dem Weg über die Vakuumpumpe (17) ein geringer Überdruck in der Entlüftungskammer (4) aufgebaut.

Verdampfung: Mit Hilfe der Vakuumpumpe (18) wird im Dampfraum (16) ein Vakuum erzeugt. Der Dampfraum (16) setzt sich bis in den oberen Bereich der Verdampfungskammer (5) fort. Das erzeugte Vakuum liegt dort unter dem Siededruck des entlüfteten Meerwassers. Damit tritt dort Verdampfung unter gleichzeitiger Abkühlung ein. Der Verdampfer (5) ist als Wärmetauscher mit turbulenter Warmwasserströmung in den Heizrohren (32) und mit konvektivem Wärmeübergang ausgebildet. Die Abkühlung wird durch den Wärmeübergang ausgeglichen und der Verdampfungsvorgang setzt sich fort. Dabei wird der Salzgehalt des entlüfteten Meerwassers allmählich größer und der Verdampfungsvorgang wird schwächer. Dem wird durch geregeltes Abpumpen der Sole mit der Soleförderpumpe (13) und nachfolgendes Auffüllen der Verdampfungskammer (5) mit frisch entlüftetem Meerwasser über die Rohrleitung (12) entgegengewirkt.

Kondensation: Das mit Kühlrippen (14) versehene Tauchrohr (3) ist mehrere hundert Meter lang und reicht bis in eine Meerestiefe, in der das Meerwasser deutlich kälter ist als in Oberflächennähe. An den Innenwänden des Tauchrohrs (3) findet die Kondensation des Dampfes statt, wobei das Kondensat als Süßwasser abtropft. Das Süßwasser sammelt sich in der Süßwasserkammer (7) an. Die freiwerdende Kondensationswärme wird über das mit Kühlrippen (14) versehene Tauchrohr (3) nach außen abgeleitet. Das Tauchrohr (3) wird vom umgebenden Meerwasser durch Anströmung und Konvektion gekühlt.

Süßwassertransport: Mit Hilfe der geregelt betriebenen Süßwasserförderpumpe (21) wird das Süßwasser durch die Süßwasserleitung (22) in einen Vorratsbehälter gepumpt.

Elektrische Leitungen: Die elektrische Energie wird entweder aus dem Netz vom Land bezogen oder in einem an dem Wassergewinnungsaggregat geeignet angebrachten Stromaggregat erzeugt. Ein elektrisches Leitungssystem versorgt die Pumpen und Regelungseinrichtungen. Ein Prozeßrechner dient der Prozeßregelung und -überwachung. Ein zweites elektrisches Leitungssystem dient der Datenübermittlung.

Anbringung: Die Anbringung des Wassergewinnungsaggregats am Meeresboden geschieht als Einpunktaufhängung über eine Ankerkette (24) an einem Ankergewicht (23) mit Befestigungsvorrichtungen (25) an beiden Enden der Ankerkette (24). Das als starr anzusehende Wassergewinnungsaggregat ist schwingungsfähig und wird an seinem oberen Ende von der Wellenbewegung zu Schwingungen angeregt. Diese Anregung führt jedoch wegen der Trägheit des Wassergewinnungsaggregats zu nur geringfügigen Schwingungen, die für den Betrieb unerheblich sind. Die Befestigungsvorrichtung (25) am Wassergewinnungsaggregat befindet sich etwa in der Mitte zwischen dem Auftriebspunkt (9) und dem Schwerpunkt (10). Bei jeder Abweichung des Wassergewinnungsaggregats von der Vertikalen treten rücktreibende Drehmomente auf. Am Tauchrohr (3) angebrachte horizontale Dämpfungsflächen (15) dämpfen die vertikalen Schwingungen ab, indem sie die Resonanzfrequenz des Wassergewinnungsaggregats zu geringeren Frequenzen hin verschieben.

Höhenregelung: Die Höhenlage des Wassergewinnungsaggregats wird mit Hilfe einer Luftkammer (6) und eines Kompressors (20) aktiv geregelt.

### Zeichenerklärung zu den Figuren 1 und 2

- 1:: Meeresoberfläche
- 2:: Meeresboden
- 3:: Tauchrohr
- 4:: Entlüfter, insbesondere auch die Entlüftungskammer
- 5:: Verdampfer, insbesondere auch die Verdampfungskammer
- 6:: Luftkammer
- 7:: Süßwasserkammer
- 8:: Gewicht
- 9:: Auftriebspunkt
- 10:: Schwerpunkt
- 11:: Druckreduktionsvorrichtung
- 12:: Rohrleitung mit Absperrhahn zwischen Entlüfter und Verdampfer für das entlüftete Meerwasser
- 13:: Soleförderpumpe
- 14:: Kühlrippen
- 15:: Dämpfungsflächen
- 16:: Dampfraum
- 17:: Vakuumpumpe am Entlüfter
- 18:: Vakuumpumpe am Verdampfer
- 19:: Schwimmer
- 20:: Kompressor
- 21:: Süßwasserförderpumpe
- 22:: Süßwasserleitung
- 23:: Ankergewicht
- 24:: Ankerkette
- 25:: Befestigungsvorrichtungen
- 26:: Eingang am Verdampfer für das entlüftete Meerwasser
- 27:: Ausgang am Verdampfer für die Sole
- 28:: Ausgang des Verdampfers zum Dampfraum
- 29:: Meerwasseroberfläche im Verdampfer
- 30:: Einlaßöffnungen an den Heizrohren des Verdampfers für warmes Meerwasser aus der Umgebung
- 31:: Auslaßöffnungen an den Heizrohren des Verdampfers für abgekühltes Meerwasser jeweils mit Rückschlagventil
- 32:: Heizrohre
- ANMERKUNG:: Die Vakuumpumpen (17) und (18) können in einer umschaltbaren Vakuumpumpe (17)(18) zusammengefaßt sein.

## Patentansprüche

1. Verfahren zur Gewinnung von Süßwasser aus entlüfteten, warmen Meerwasser (Substrat) durch diskontinuierliche einstufige Verdampfung ohne aktive Heizung im Vakuum von 10 bis 30 Hektopascal und durch Kondensation des erzeugten Dampfes mit Hilfe von kaltem Meerwasser, **dadurch gekennzeichnet, daß** das Wassergewinnungsaggregat unter Wasser schwebend betrieben wird und die Meeresströmung nahe der Oberfläche und die Wellenbewegung veranlaßt werden, dem Prozeß unmittelbar Verdampfungswärme in Form von warmen Meerwasser zuzuführen, und die Meeresströmung in der Tiefe des Meeres veranlaßt wird, aus dem Prozeß Kondensationswärme durch das kalte Meerwasser abzuführen, wobei das Substrat vom Heiz- und Kühlwasser getrennt geführt und nur das Substrat durch Abpumpen der gelösten Luftbestandteile entlüftet wird, wobei eine sehr weitgehende Entlüftung des Substrates in einem diskontinuierlichen Prozeßschritt vor der Verdampfung geschieht und die Entlüftung in einem Entlüftungsraum und die Verdampfung in einem Verdampfungsraum stattfinden, deren Vakua unabhängig voneinander bestehen, und die von Heizungsrohren durchdrungen sind, die durch die Wirkung von Strömung und Wellenbewegung des umgebenden Meerwassers von diesen turbulent durchströmt werden.

2. Vorrichtung zur Durchführung des Verfahrens nach Anspruch 1, **gekennzeichnet durch** Auslegung eines mehrere hundert Meter messenden, vertikal im Meerwasser schwebenden, den Dampfraum (16) bildenden Tauchrohrs (3) derart, daß an seinem oberen Ende ein Entlüfter mit einer Entlüftungskammer (4), ein mit diesem über eine Rohrleitung mit Absperrhahn (12) verbundener Verdampfer (5) und eine Luftkammer (6), an seinem unteren Ende eine Süßwasserkammer (7) und darunter ein Gewicht (8) angebracht sind, wobei der Dampfraum (16) und die Entlüftungskammer (4) mit Vakuumpumpen (17,18) verbunden sind und der Entlüfter und der Verdampfer (5) als Wärmetauscher mit Rückschlagventilen an den Auslaßöffnungen (31) der Heizrohre (32) ausgebildet sind und in den Heizrohren (32) durch die Meeresströmung und die Wellenbewegung eine gerichtete turbulente Strömung warmen Meerwassers hervorgerufen wird, und derart, daß am außen der kalten Meeresströmung und der Konvektion ausgesetzten Tauchrohr (3) Kühlrippen (14) angebracht sind.

## Claims

1. Method for the production of fresh water from deaerated warm sea water (substrate) by discontinuous single-stage evaporation without active heating in a vacuum of 10 to 30 hectopascal and by condensation of the generated steam with the aid of cold sea water, characterized in that the water production unit is operated floating under water and the ocean current near the surface and the wave motion are made to supply heat of evaporation directly to the process in the form of warm sea water and the ocean current in the ocean depth is made to conduct away heat of condensation from the process by the cold sea water, the substrate being fed separately from the heating water and cooling water and only the substrate being deaerated by pumping off the dissolved air components, a very substantial deaeration of the substrate being achieved in a discontinuous process step upstream of the evaporation and the deaeration taking place in a deaeration space and the evaporation taking place in an evaporation space, the vacua of which exist independently of each other and through which spaces pass heating tubes through which, as a result of the action of current and wave motion of the surrounding sea water, this sea water flows turbulently.

2. Apparatus for carrying out the method according to Claim 1, characterized by designing a submerged tube (3), measuring several hundred metres, floating vertically in the sea water and forming the vapour space (16), in such a way that at its top end are mounted a deaerator having a deaeration chamber (4), an evaporator (5), which is connected to this deaeration chamber (4) via a pipe having a shut-off cock (12), and an air chamber (6), at its bottom end is mounted a fresh water chamber (7) and beneath this a weight (8), the vapour space (16) and the deaeration chamber (4) being connected to vacuum pumps (17, 18) and the deaerator and the evaporator (5) being constructed as heat exchangers having non-return valves at the outlet orifices (31) of the heating tubes (32) and a directed turbulent flow of warm sea water being caused in the heating tubes (32) by the ocean current and the wave motion, and in such a way that cooling fins (14) are mounted on the outside of the submerged tube (3) exposed to the cold ocean current and the convection.

## Revendications

1. Procédé d'obtention d'eau douce à partir d'eau de mer chaude désaérée (substrat), par vaporisation discontinue à un seul étage, sans chauffage actif et sous un vide compris entre 10 et 30 hectopascals, et par condensation de la vapeur produite, au moyen d'eau de mer froide, caractérisé en ce qu'on fait fonctionner l'installation de d'obtention d'eau d'une manière flottante sous l'eau et en ce qu'on fait en sorte que les courants marins au voisinage de la surface et le mouvement des vagues fournissent directement la chaleur de vaporisation au procédé, sous la forme d'eau de mer chaude, et en sorte que les courants marins au fond de la mer évacuent du procédé la chaleur de condensation au moyen de l'eau de mer froide, tandis que le substrat est guidé d'une manière séparée de l'eau chaude et de l'eau froide et que seul ce substrat est désaéré par pompage de l'air constitutif dissous, une désaération très poussée du substrat ayant lieu au cours d'une opération discontinue du procédé qui précède la vaporisation, tandis que la désaération a lieu dans un compartiment de désaération et la vaporisation dans un compartiment de vaporisation, compartiments dont les dépressions sont réalisées indépendamment l'une de l'autre et qui sont traversés par des tubes de chauffage dans lesquels l'eau de mer environnante passe d'une manière turbulente sous l'effet de l'action des courants et du mouvement des vagues de cette eau de mer environnante.

2. Installation de mise en oeuvre du procédé selon la revendication 1, caractérisée par la mise en place d'un tube immergé (3) mesurant plusieurs centaines de mètres, disposé d'une manière flottante verticalement dans l'eau de mer et constituant le compartiment de vapeur (16), d'une façon telle qu'il est disposé, à son extrémité supérieure, un désaérateur, comportant une chambre de désaération (4), un vaporisateur (5), communiquant avec le désaérateur par une tuyauterie pourvue d'un robinet d'arrêt (12), et une chambre d'air (6) et, à son extrémité inférieure, une chambre d'eau douce (7) et un balourd (8) disposé au-dessous de cette chambre, le compartiment de vapeur (16) et la chambre de désaération (4) étant reliés à des pompes à vide (17, 18) et le désaérateur et le vaporisateur (5) étant réalisés sous la forme d'échangeurs de chaleur pourvus de clapets antiretour à l'endroit des ouvertures de sortie (31) des tubes de chauffage (32), tandis qu'un écoulement turbulent orienté d'eau de mer chaude est provoqué dans les tubes de chauffage (32) par les courants marins et le mouvement des vagues, des ailettes de refroidissement (14) étant montées extérieurement sur le tube immergé (3) soumis aux courants marins froids et à la convexion.
